# EUROPÄISCHE PATENTSCHRIFT

(11) **EP 3 564 454 B1**
(45) Veröffentlichungstag und Bekanntmachung des Hinweises auf die Patenterteilung: **13.01.2021**
(21) Anmeldenummer: 19171374.2
(22) Anmeldetag: 26.04.2019
(51) Int. Cl.: E03F 5/14

(54) **ABSCHEIDUNGSEINRICHTUNG ZUM ENTFERNEN VON GEGENSTÄNDEN AUS EINEM WASSERSTROM UND VERFAHREN FÜR DEN BETRIEB EINER SOLCHEN ABSCHEIDUNGSEINRICHTUNG**
SEPARATION DEVICE FOR REMOVING OBJECTS FROM A WATER FLOW AND METHOD FOR OPERATING SUCH A SEPARATION DEVICE
DISPOSITIF DE SÉPARATION PERMETTANT D'ÉLIMINER DES OBJETS D'UN COURANT D'EAU ET PROCÉDÉ DE FONCTIONNEMENT D'UN TEL DISPOSITIF DE SÉPARATION

(30) Priorität: 03.05.2018 DE 102018110633
(43) Veröffentlichungstag der Anmeldung: 06.11.2019
(73) Patentinhaber: Jürgen Kuhn und Michael Kuhn Grundstücksverwaltungs und Verpachtungs GbR, 74746 Höpfingen (DE)
(72) Erfinder: Kuhn, Michael, 74746 Höpfingen (DE); Blaha, Stefan, 74740 Adelsheim (DE)
(74) Vertreter: Reiser & Partner Patentanwälte mbB

(56) Entgegenhaltungen:
- DE-A1- 3 329 214
- DE-A1- 3 329 215
- DE-A1- 3 823 614
- DE-A1-102016 109 836
- DE-A1-102016 110 760

## Beschreibung

Die Erfindung betrifft eine Abscheidungseinrichtung zum Entfernen von Gegenständen aus einem Wasserstrom, mit einem Abscheidungsfeld und einem Gerinne, das einen Zulauf und einen Ablauf für das Abscheidungsfeld bildet, wobei sich im Betrieb in dem Zulauf vor dem Abscheidungsfeld ein Oberwasser mit einem Oberwasserpegel und in dem Ablauf hinter dem Abscheidungsfeld ein Unterwasser mit einem Unterwasserpegel einstellen kann, wobei der Ablauf einen Ablaufquerschnitt für den Wasserstrom aufweist, mit einem über eine Betätigung verstellbaren Staukörper zum Eintauchen in den Ablauf, wobei der Staukörper zumindest zwischen einer ersten Stellung und einer zweiten Stellung verstellbar ist, wobei in der ersten Stellung der Ablaufquerschnitt kleiner und in der zweiten Stellung der Ablaufquerschnitt größer ist. Insbesondere kann die Abscheidungseinrichtung als Recheneinrichtung ausgebildet sein, wobei das Abscheidungsfeld als Rechenfeld ausgebildet ist. Weiterhin kann die Abscheidungseinrichtung als Siebeinrichtung ausgebildet sein, wobei das Abscheidungsfeld als Siebfeld ausgebildet ist. Die Erfindung betrifft darüber hinaus ein Verfahren für den Betrieb einer Abscheidungseinrichtung zum Entfernen von Gegenständen aus einem Wasserstrom, wobei die Abscheidungseinrichtung ein Abscheidungsfeld und ein Gerinne, das einen Zulauf und einen Ablauf für das Abscheidungsfeld bildet, aufweist, wobei sich in dem Zulauf vor dem Abscheidungsfeld ein Oberwasser mit einem Oberwasserpegel und in dem Ablauf hinter dem Abscheidungsfeld ein Unterwasser mit einem Unterwasserpegel einstellt, wobei der Ablauf einen Ablaufquerschnitt für den Wasserstrom aufweist, wobei die Abscheidungseinrichtung einen über eine Betätigung verstellbaren Staukörper zum Eintauchen in den Ablauf aufweist, der zumindest zwischen einer ersten Stellung und einer zweiten Stellung verstellbar ist, wobei in der ersten Stellung der Ablaufquerschnitt kleiner und in der zweiten Stellung der Ablaufquerschnitt größer ist.

Abscheidungseinrichtungen an sich sind bekannt und werden regelmäßig eingesetzt, um Gegenstände aus einem Wasserstrom zu entfernen. Auf diese Weise kann insbesondere eine mechanische Vorreinigung eines Wasserstromes durchgeführt werden. Ein typisches Anwendungsgebiet solcher Abscheidungseinrichtungen sind Abwasserbehandlungsanlagen und Kläranlagen, welche entsprechende Abscheidungseinrichtungen umfassen können.

Die DE 38 23 614 A1 beschreibt eine Anlage zum Messen des Durchflusses von Abwasser, die einen Drosselschieber aufweist. In der DE 33 29 214 A1 und der DE 33 29 215 A1 ist jeweils eine Anordnung zur Messung der Differenzhöhe zwischen zwei Flüssigkeitsspiegeln beschrieben.

In der DE10 2016 110760 A1 und der EP 2 933 391 A1 ist eine Abscheidungseinrichtung beschrieben, die als Sieb- oder Recheneinrichtung ausgebildet ist. Die vorbekannte Abscheidungseinrichtung weist einen Staukörper auf, der in Strömungsrichtung hinter dem Abscheidungsfeld angeordnet ist. Mit dem Staukörper kann der Pegelstand des Unterwassers beeinflusst werden.

Der Erfindung liegt demgegenüber die Aufgabe zugrunde, eine Abscheidungseinrichtung und ein Verfahren für den Betrieb einer Abscheidungseinrichtung anzugeben, die eine verbesserte Abscheidung von Gegenständen aus dem Wasserstrom ermöglichen.

Die Aufgabe wird bei einer Abscheidungseinrichtung mit den Merkmalen von Anspruch 1 gelöst. Demnach ist eine eingangs genannte Abscheidungseinrichtung gekennzeichnet durch eine Steuereinrichtung, wobei die Steuereinrichtung einen ersten Betriebsmodus umfasst, in dem die Strömungsgeschwindigkeit in dem Bereich des Abscheidungsfeldes dadurch erhöht wird, dass der Staukörper aus der ersten Stellung in die zweite Stellung gebracht wird, und wobei die Steuereinrichtung einen zweiten Betriebsmodus umfasst, in dem die Strömungsgeschwindigkeit in dem Bereich des Abscheidungsfeldes dadurch verändert wird, dass der Staukörper aus der zweiten Stellung in eine dritte Stellung gebracht wird, wobei in der dritten Stellung der Ablaufquerschnitt kleiner oder größer als in der zweiten Stellung ist, und wobei die Steuereinrichtung eingerichtet ist, um automatisch den ersten und/oder den zweiten Betriebsmodus zu aktivieren.

Die Aufgabe wird bei einem Verfahren für den Betrieb einer Abscheidungseinrichtung mit den Merkmalen von Anspruch 14 gelöst. Demnach ist bei dem eingangs genannten Verfahren vorgesehen, dass die Abscheidungseinrichtung eine Steuereinrichtung aufweist, wobei die Steuereinrichtung einen ersten Betriebsmodus umfasst, in dem die Strömungsgeschwindigkeit in dem Bereich des Abscheidungsfeldes dadurch erhöht wird, dass der Staukörper aus der ersten Stellung in die zweite Stellung gebracht wird, und wobei die Steuereinrichtung einen zweiten Betriebsmodus umfasst, in dem die Strömungsgeschwindigkeit in dem Bereich des Abscheidungsfeldes dadurch verändert wird, dass der Staukörper aus der zweiten Stellung in eine dritte Stellung gebracht wird, wobei in der dritten Stellung der Ablaufquerschnitt kleiner oder größer als in der zweiten Stellung ist, und wobei die Steuereinrichtung automatisch den ersten und/oder den zweiten Betriebsmodus aktiviert.

Durch die beanspruchte Abscheidungseinrichtung und das beanspruchte Verfahren kann eine besonders effektive Reinigung des Wasserstromes erreicht werden. Insbesondere ist es möglich, auch bei unterschiedlichen Bedingungen eine gute Abscheidungsrate zu erreichen. Auf diese Weise kann zum einen bei kleineren Wassermengen, wie sie in Kläranlagen z.B. zu Tageszeiten mit niedrigem Zufluss auftreten, eine gute Reinigung des Wasserstroms erreicht werden. Auch bei größeren Mengen des abzuscheidenden Materials, welche insbesondere zu Tageszeiten mit höherem Zufluss auftreten können, kann ein gutes Reinigungsergebnis erreicht werden. Darüber hinaus kann auch im Falle von Niederschlägen, wie z.B. einem Gewitterregen, und entsprechend großen Wassermengen eine gute Abscheidung erreicht werden. Dabei ist zu berücksichtigen, dass eine Abscheidungseinrichtung grundsätzlich für einen maximalen Wasserstrom ausgelegt wird. Bei einer Kläranlage kann dies z.B. der Wasserstrom sein, der bei Starkregen auftritt. Der Fall des maximalen Wasserstroms wird aber in der Regel nur an wenigen Tagen im Jahr erreicht. Daher wird die Abscheidungseinrichtung für einen Großteil der Zeit mit einem Wasserstrom verwendet, der erheblich unter dem für die Auslegung verwendeten maximalen Wasserstrom liegt. Aufgrund der Steuerungseinrichtung kann gleichwohl auch bei einem Wasserstrom, der erheblich unter dem maximalen Wasserstrom liegt, eine optimierte Abscheidung erreicht werden. Ein weiterer Vorteil ist dabei, dass durch die Steuereinrichtung auch die unerwünschte Ablagerung von Sand (und ähnlichem Material, das schwerer als Wasser ist) auf dem Boden vor dem Abscheidungsfeld vermieden werden kann. Durch die Abscheidungseinrichtung kann mit der Steuereinrichtung die Strömungsgeschwindigkeit in dem Zulauf und dem Auslauf derart beeinflusst werden, dass einerseits das Rückhaltevermögen der Abscheidungseinrichtung verbessert wird. Hierzu trägt insbesondere die Einstellung einer verringerten Strömungsgeschwindigkeit des Wasserstromes im Bereich des Abscheidungsfeldes durch Anheben des Unterwasserpegels mit dem Staukörper bei. Dadurch werden die Durchlässe in dem Abscheidungsfeld gleichmäßiger und mit reduzierter Turbulenz durchströmt. Zudem wird Rechengut weniger stark in oder durch die Durchlässe gedrückt. Auf diese Weise kann die Abscheidungsleistung erheblich verbessert werden. Weiterhin ist vorteilhaft, wenn die Strömungsgeschwindigkeit nicht zu gering ist, da es ansonsten zu der Ablagerung von Sand und anderem Material vor dem Abscheidungsfeld kommen kann. Durch den Staukörper kann die Fließgeschwindigkeit des Wasserstromes durch das Abscheidungsfeld, das z.B. Rechenstäbe umfassen kann, verkleinert werden, beispielsweise indem der Staukörper (oder ein Abschnitt hiervon) nach unten bewegt wird, sodass sich der Ablaufquerschnitt verkleinert. Umgekehrt kann bei in das Unterwasser eingetauchtem Staukörper die Fließgeschwindigkeit des Wasserstromes in dem Abscheidungsfeld vergrößert werden, beispielsweise indem der Staukörper (oder ein Abschnitt hiervon) nach oben bewegt wird, sodass sich der Ablaufquerschnitt vergrößert. Die beschriebene Abscheidungseinrichtung mit dem Staukörper und der Steuereinrichtung, welche den ersten und den zweiten Betriebsmodus umfasst, ermöglicht es, die Strömungsgeschwindigkeit in einem günstigen Bereich einzustellen, sodass die beschriebenen nachteiligen Effekte reduziert werden. Daher trägt die Erfindung auch zu einer verbesserten Zuverlässigkeit der Abscheidungseinrichtung bei. Außerdem können die Betriebskosten gesenkt werden. Zudem kann mit der Abscheidungseinrichtung auch auf den sogenannten Spülstoß reagiert werden. In einer Phase mit geringerem Wasserstrom können Gegenstände in den Kanalrohren vor dem Zulauf zunächst zurückbleiben. Kommt es dann zu einer Erhöhung des Wasserstroms, werden diese Gegenstände von dem Wasserstrom mitgenommen. Auf diese Weise gelangt dann mit der Erhöhung des Wasserstroms zunächst eine deutlich größere Menge von Gegenständen zu der Abscheidungseinrichtung. Wenn der Wasserstrom dann anhält, nimmt die Menge von Gegenständen wieder ab, da die liegengebliebenen Gegenstände zu Beginn des Wasseranstiegs ausgespült wurden. Dieser Effekt tritt z.B. morgens auf, wenn nach der Nacht mit einem reduzierten Wasseranfall eine Vielzahl von Personen aufsteht und den Wasserverbrauch erhöht. Daher kommt es regelmäßig nach der Nacht zu einem erhöhten Anfall an Gegenständen, die durch die Abscheidungseinrichtung aus dem Wasserstrom zu entfernen sind. Der Effekt des Spülstoßes tritt zudem auf, wenn es nach einer Trockenphase erstmals stärker regnet. Die dritte Stellung des Staukörpers kann der ersten Stellung entsprechen. Es ist aber auch möglich, dass der Ablaufquerschnitt in der dritten Stellung größer oder kleiner als der Ablaufquerschnitt in der ersten Stellung ist. Weiterhin kann vorgesehen sein, dass die Steuereinrichtung neben dem ersten und den zweiten Modus über einen oder mehrere weitere Modi verfügt. Insbesondere kann vorgesehen sein, dass der Staukörper in eine Vielzahl von (weiteren) Stellungen mit jeweils unterschiedlichem Ablaufquerschnitt gebracht werden kann. Auf diese Weise kann die Abscheidungseinrichtung noch besser gesteuert und an die jeweilige Situation angepasst werden. Der verstellbare Tauchkörper kann auf unterschiedliche Weise in den Ablauf eintauchen. Beispielsweise kann der Tauchkörper von oben oder von einer Seitenwand des Gerinnes in den Ablauf bewegt werden, um den Ablaufquerschnitt zu verändern. Weiterhin kann der Tauchkörper eine veränderliche Form und/oder Größe aufweisen, um in den Ablauf einzutauchend den Ablaufquerschnitt zu verändern.

Erfindungsgemäß ist bevorzugt, dass die Steuereinrichtung in dem zweiten Betriebsmodus die Strömungsgeschwindigkeit in dem Bereich des Abscheidungsfeldes dadurch verringert, dass der Staukörper aus der zweiten Stellung in die dritte Stellung gebracht wird, wobei in der dritten Stellung der Ablaufquerschnitt kleiner als in der zweiten Stellung ist.

Die Erfindung sieht weiterhin vor, dass die Steuereinrichtung eingerichtet ist, um automatisch den ersten und/oder den zweiten Betriebsmodus zu aktivieren. Wenn die Aktivierung des ersten und des zweiten Betriebsmodus erfolgt, wird dies nacheinander durchgeführt. Auf diese Weise kann die Steuereinrichtung selbsttätig eine Anpassung an die jeweilige Betriebssituation vornehmen. Dabei ist es möglich, dass die Steuereinrichtung einen Wechsel von dem ersten zu dem zweiten Betriebsmodus als auch von dem zweiten zu dem ersten Betriebsmodus vornimmt. Zudem kann die Steuereinrichtung dazu eingerichtet sein, automatisch wenigstens einen weiteren Betriebsmodus zu aktivieren.

Ein verkleinerter Ablaufquerschnitt kann in vorteilhafter Weise dadurch erreicht werden, dass der Staukörper (oder ein Abschnitt hiervon) durch die Betätigung aus einer höheren Position nach unten in eine tiefere Position bewegt wird und dabei in größerem Umfang in das Unterwasser eintaucht. Ein vergrößerter Ablaufquerschnitt kann insbesondere dadurch erreicht werden, dass der Staukörper (oder ein Abschnitt hiervon) durch die Betätigung aus einer tieferen Position in eine höhere Position nach oben bewegt wird, sodass der Staukörper in geringerem Maß in das Unterwasser eintaucht oder aus dem Unterwasser herausbewegt wird. Auf diese Weise kann der Ablaufquerschnitt wirksam und zuverlässig eingestellt werden, wobei die Anlagenkosten gering gehalten werden können. Der Staukörper kann aber auch auf andere Weise den Ablaufquerschnitt beeinflussen. Beispielsweise kann durch eine Veränderung des Volumens und/oder der Stellung des Staukörpers der Ablaufquerschnitt verkleinert oder vergrößert werden.

Eine vorteilhafte Ausgestaltung der Erfindung sieht vor, dass das Abscheidungsfeld ein Rechenfeld ist. Das Rechenfeld kann insbesondere mehrere Rechenstäbe aufweisen, zwischen denen Durchlässe für den Wasserstrom ausgebildet sind. Vorzugsweise ist eine Vielzahl von parallel angeordneten Rechenstäben vorgesehen. Durch den Staukörper kann die Fließgeschwindigkeit des Wasserstromes zwischen den Rechenstäben verkleinert werden, indem z.B. der Staukörper (oder ein Abschnitt hiervon) nach unten bewegt wird, sodass sich der Ablaufquerschnitt verkleinert. Umgekehrt kann bei in das Unterwasser eingetauchtem Staukörper die Fließgeschwindigkeit des Wasserstromes zwischen den Rechenstäben vergrößert werden, indem z.B. der Staukörper (oder ein Abschnitt hiervon) nach oben bewegt wird, sodass sich der Ablaufquerschnitt vergrößert.

Nach einer vorteilhaften Ausgestaltung kann vorgesehen sein, dass das Abscheidungsfeld als Siebfeld ausgebildet ist. Das Siebfeld weist dabei Sieböffnungen auf. Mit einem Siebfeld kann im Vergleich zu einem Rechenfeld ein verbessertes Rückhaltevermögen erreicht werden, wobei jedoch der Strömungswiderstand höher liegt.

In vorteilhafter Weise ist vorgesehen, dass die Steuereinrichtung ein Zeitprogramm umfasst, welches die Aktivierung des ersten und/oder des zweiten Betriebsmodus auslöst. Auf diese Weise kann die Abscheidungseinrichtung z.B. an regelmäßig auftretende Effekte, wie einen morgendlichen Spülstoß, angepasst werden, indem zu der jeweiligen Zeit der zweite Betriebsmodus aktiviert wird. Nach Ablauf einer Zeitspanne kann dann wieder der erste Betriebsmodus aktiviert werden.

Die Erfindung sieht vor, dass die Steuereinrichtung einen ersten Sensor umfasst, durch den ein erstes Sensorsignal erzeugt wird, und dass die Steuereinrichtung eine Aktivierung des ersten und/oder des zweiten Betriebsmodus in Abhängigkeit von dem ersten Sensorsignal auslöst. Die Aktivierung kann dabei z.B. als Wechsel von dem ersten zu dem zweiten Betriebsmodus und/oder von dem zweiten zu dem ersten Betriebsmodus erfolgen. Auf diese Weise kann die Abscheidungseinrichtung automatisch an den jeweiligen Betriebszustand angepasst werden.

Weiterhin sieht die Erfindung vor, dass der erste Sensor ein von der Größe des Wasserstroms abhängiges erstes Sensorsignal erzeugt. Auf diese Weise kann die Abscheidungseinrichtung anhand der jeweiligen Wasserdurchflussmenge gesteuert oder geregelt werden. Insbesondere kann durch den ersten Sensor die Höhe des Oberwasserpegels und/oder ein mit der Wasserdurchflussmenge in Verbindung stehender Messwert, wie z.B. die Strömungsgeschwindigkeit, ermittelt werden.

Weiterhin ist vorteilhaft, wenn die Steuereinrichtung einen zweiten Sensor umfasst, durch den ein zweites Sensorsignal erzeugt wird, wobei die Steuereinrichtung eine Aktivierung des ersten und/oder des zweiten Betriebsmodus in Abhängigkeit von dem zweiten Sensorsignal auslöst. Dies erlaubt eine noch bessere Steuerung der Abscheidungseinrichtung. Insbesondere kann durch den zweiten Sensor ein Unterwasserpegel oder ein damit in Verbindung stehender Messwert ermittelt werden.

Zudem kann vorgesehen sein, dass die Steuereinrichtung zumindest einen weiteren Sensor umfasst, der zumindest ein weiteres Sensorsignal erzeugt. Dies erlaubt eine noch bessere Steuerung der Abscheidungseinrichtung.

Eine bevorzugte Ausgestaltung der Erfindung sieht vor, dass in der Steuereinrichtung ein erster Auslösewert für das erste Sensorsignal und/oder das zweite Sensorsignal gespeichert ist und dass die Steuereinrichtung bei Erreichen oder Überschreiten des ersten Auslösewertes den ersten Betriebsmodus aktiviert. Auf diese Weise kann, beispielsweise wenn der Wasserstrom groß wird, der Ablaufquerschnitt vergrößert werden.

Weiterhin ist bevorzugt, dass in der Steuereinrichtung ein zweiter Auslösewert für das erste Sensorsignal und/oder das zweite Sensorsignal gespeichert ist und dass die Steuereinrichtung bei Erreichen oder Unterschreiten des zweiten Auslösewertes den zweiten Betriebsmodus aktiviert. Auf diese Weise kann, beispielsweise wenn der Wasserstrom geringer wird, der Ablaufquerschnitt verkleinert werden.

Weiterhin kann in vorteilhafter Weise vorgesehen sein, dass in der Steuereinrichtung ein dritter Auslösewert für das erste Sensorsignal und/oder das zweite Sensorsignal gespeichert ist und dass die Steuereinrichtung bei Erreichen oder Unterschreiten des dritten Auslösewertes den ersten Betriebsmodus aktiviert. Auf diese Weise kann insbesondere auf einen sehr geringen Wasserstrom reagiert werden, in dem eine Reduzierung der Strömungsgeschwindigkeit zu unerwünschten Ablagerungen vor dem Abscheidungsfeld führen würde.

Eine weitere bevorzugte Ausgestaltung der Erfindung sieht vor, dass der erste Sensor den Oberwasserpegel und der zweite Sensor den Unterwasserpegel erfasst, dass in der Steuereinrichtung ein vierter Auslösewert gespeichert ist, und dass die Steuereinrichtung, wenn eine Differenz zwischen dem ersten Sensorsignal und dem zweiten Sensorsignal den vierten Auslösewert erreicht oder überschreitet, eine Reinigung des Abscheidungsfeldes mit einer Reinigungseinrichtung auslöst. Auf diese Weise kann ein zugesetztes bzw. verblocktes Abscheidungsfeld automatisch ermittelt und die Reinigung aktiviert werden.

Die Reinigungseinrichtung kann beispielsweise umlaufende Harken aufweisen, welche entlang der Stäbe des Rechenfeldes bewegt werden. Nach einer weiteren bevorzugten Ausgestaltung weist die Abscheidungseinrichtung ein Rechenfeld auf, das als Filterstufenrechen ausgebildet ist, und aufgrund von beweglichen Lamellen des Rechenfeldes, die mit einem Antrieb versehen sind, gereinigt werden kann. Weiterhin kann die Reinigungseinrichtung einen Spiralförderer vor dem Abscheidungsfeld aufweisen. Weiterhin kann vorgesehen sein, dass durch die Reinigungseinrichtung das Abscheidungsfeld, das z.B. als Lochblech, Rotationsrechen oder Rotationssieb ausgebildet sein kann, zum Entfernen von Verunreinigungen nach oben bewegt und/oder gedreht werden kann. Zudem können Bürsten und/oder Sprühdüsen vorgesehen sein, die sich insbesondere auch für die Reinigung von Siebfeldern eignen.

Weiterhin kann in besonders bevorzugter Weise vorgesehen sein, dass die Steuereinrichtung einen Regelkreis mit einem Regler bildet, der ein Steuersignal für die Betätigung der Reinigungseinrichtung erzeugt und dass das erste Sensorsignal und/oder das zweite Sensorsignal als Regelgröße des Regelkreises verwendet wird. Auf diese Weise kann ein geregelter Betrieb der Reinigungseinrichtung erfolgen, sodass auch unter wechselnden Betriebszuständen ein gutes Rückhaltevermögen der Abscheidungseinrichtung erreicht wird, wobei gleichzeitig die unerwünschte Ablagerung von Sand (oder anderen Gegenständen, die schwerer als Wasser sind) vor dem Abscheidungsfeld reduziert wird. Beispielsweise kann die Reinigungseinrichtung solange durch die Steuereinrichtung in Betrieb gesetzt werden, bis die durch das erste und zweite Sensorsignal ermittelte Höhendifferenz zwischen dem Oberwasser und dem Unterwasser in einem vorgegebenen Bereich liegt.

Erfindungsgemäß kann in vorteilhafter Weise vorgesehen sein, dass der erste, der zweite, der dritte und/oder der vierte Auslösewert variabel sind. Auf diese Weise kann die Steuerung weiter verbessert werden. Je nach Betriebssituation, z.B. in Abhängigkeit von wenigstens einem Messwert, wird dann der jeweilige Auslösewert (bzw. die jeweiligen Auslösewerte) durch die Steuerung verändert.

Erfindungsgemäß ist weiterhin besonders bevorzugt, wenn die Steuereinrichtung eine Spülstoßdetektierung aufweist, welche anhand wenigstens eines des ersten und des zweiten Sensorsignals einen Anstieg des Wasserstromes detektiert, wobei in der Steuereinrichtung ein Spülstoßauslösewert gespeichert ist und wobei, wenn das wenigstens eine des ersten und zweiten Sensorsignals oder ein Anstieg des wenigstens einen des ersten und zweiten Sensorsignals in einer Zeiteinheit den Spülstoßauslösewert erreicht oder überschreitet, der zweite Betriebsmodus aktiviert wird. Hierbei kann vorgesehen sein, dass zur Spülstoßdetektierung die Länge des Zeitraums erfasst wird, welcher vergangen ist, nachdem das Volumen des Wasserstroms einen gespeicherten Wert überschritten oder unterschritten hat. Auf diese Weise kann insbesondere die Länge des Zeitraums seit dem letzten Niederschlag ermittelt und bei der automatischen Spülstoßdetektierung berücksichtigt werden.

Erfindungsgemäß kann weiterhin vorgesehen sein, dass die Steuereinrichtung eine Schnittstelle aufweist, über die eine Aktivierung des ersten und/oder des zweiten Betriebsmodus manuell ausgelöst werden kann. Auf diese Weise kann der Bediener eine manuelle Steuerung der Abscheidungseinrichtung vornehmen.

Eine bevorzugte Ausgestaltung sieht vor, dass der Staukörper ohne seitlichen Abstand zu den Seitenwänden des Gerinnes angeordnet ist.

Eine bevorzugte Ausgestaltung sieht vor, dass der Staukörper sich über die gesamte Breite des Ablaufes erstreckt. Dies trägt insbesondere dazu bei, dass die Abscheidungseinrichtung zuverlässig betrieben und insbesondere automatisch gesteuert werden kann. Indem sich der Staukörper über die gesamte Breite des Ablaufes erstreckt, kann der Staukörper - unabhängig von dem Unterwasserpegel - den Ablaufquerschnitt genau definieren, da der Staukörper den Ablaufquerschnitt nach oben über die gesamte Breite des Ablaufes begrenzt.

Eine weitere bevorzugte Ausgestaltung sieht vor, dass der Staukörper an einer Seitenwand des Ablaufs verstellbar angeordnet ist. Auf diese Weise kann der Ablaufquerschnitt eingestellt werden. Vorzugsweise umfasst der Staukörper eine Basis, welche verstellbar an der Seitenwand angeordnet ist. Die Basis kann vorzugsweise über ein erstes und ein zweites Element beweglich an der Seitenwand angeordnet sein. In besonders bevorzugter Weise sind zwei Staukörper vorgesehen, die gegenüberliegend an jeweils einer Seitenwand verstellbar angeordnet sind.

Weiterhin kann in besonders bevorzugter Weise vorgesehen sein, dass die Steuereinrichtung einen Regelkreis mit einem Regler bildet, der ein Steuersignal für die Betätigung des Staukörpers erzeugt und dass das erste Sensorsignal und/oder das zweite Sensorsignal als Regelgröße des Regelkreises verwendet wird. Auf diese Weise kann eine Regelung der Abscheidungseinrichtung erfolgen, sodass auch unter wechselnden Betriebszuständen ein gutes Rückhaltevermögen der Abscheidungseinrichtung erreicht wird, wobei gleichzeitig die unerwünschte Ablagerung von Sand (oder anderen Gegenständen, die schwerer als Wasser sind) vor dem Abscheidungsfeld reduziert wird. Die Regelung hat dabei insbesondere den Vorteil, dass der Staukörper - jeweils angepasst an den jeweiligen Betriebszustand - in eine Vielzahl von Stellungen gebracht werden kann, in denen der Ablaufquerschnitt jeweils anders eingestellt ist.

Eine weitere Verbesserung sieht vor, dass die Betätigung einen Stellmotor umfasst. Insbesondere kann der Stellmotor ein Schrittmotor sein.

Eine weitere bevorzugte Ausgestaltung sieht vor, dass die Betätigung eine Fluidquelle umfasst, um den Staukörper zu verstellen. Die Fluidquelle kann insbesondere ein Gas, wie z.B. Luft unter Druck bereitstellen. Die Fluidquelle kann aber auch eine Flüssigkeit, wie insbesondere Wasser unter Druck bereitstellen.

Hierbei kann ein elastisch verformbarer Hohlkörper vorgesehen sein, der einen Hohlraum aufweist und der über die Fluidquelle in seinem Volumen und/oder seiner Form verändert wird. Hierzu kann das Fluid in den Hohlraum gefördert und aus diesem entlassen werden. Der Hohlkörper kann beispielsweise als Kissen oder Ballon ausgebildet sein. Dabei kann vorgesehen sein, dass mit dem Hohlkörper der Tauchkörper bewegt und damit verstellt wird. Hierbei ist es möglich, dass der Hohlkörper an einer Seitenwand des Gerinnes angeordnet ist.

Eine weitere Verbesserung sieht vor, dass der Tauchkörper selbst als volumen- und/oder formveränderlicher Hohlkörper mit einer Tauchkörperwandung ausgebildet ist. Über die Fluidquelle kann Fluid in den Hohlkörper gefördert werden. Indem das Fluid in den Hohlraum gefördert oder aus diesem entlassen wird, kann das Volumen und/oder die Form des Tauchkörpers verändert werden. Auf diese Weise kann der Staukörper besonders wirkungsvoll verstellt werden.

Eine weitere Verbesserung sieht vor, dass die Steuereinrichtung einen Sensor zur Erfassung der Stellung des Staukörpers aufweist. Auf diese Weise kann eine Rückmeldung über die Stellung des Staukörpers erfolgen, mit der die Steuereinrichtung die Steuerung noch effektiver durchführen kann.

Eine weitere Verbesserung sieht vor, dass der Staukörper plattenförmig ausgebildet ist. Beispielsweise kann der Staukörper eine Platte aus einem Metallblech sein. Indem der plattenförmige Staukörper (oder ein Abschnitt hiervon) nach oben bewegt wird, kann der Ablaufquerschnitt vergrößert werden. Umgekehrt kann der Ablaufquerschnitt verkleinert werden, indem der Staukörper (oder ein Abschnitt hiervon) nach unten bewegt wird. Ein Abschnitt des Staukörpers kann z.B. nach oben und unten bewegt werden, indem der Staukörper um eine Drehachse gedreht wird.

Weiterhin ist bevorzugt, dass in der zweiten Stellung und der dritten Stellung der Ablaufquerschnitt jeweils wenigstens um 3 % größer ist als in der ersten Stellung. Besonders bevorzugt ist der Ablaufquerschnitt in der zweiten und dritten Stellung jeweils wenigstens um 5 % größer als in der ersten Stellung.

Weitere Ziele, Merkmale, Vorteile und Anwendungsmöglichkeiten der vorliegenden Erfindung ergeben sich aus der nachfolgenden Beschreibung von Ausführungsbeispielen anhand der Zeichnung. Dabei bilden alle beschriebenen und/oder bildlich dargestellten Merkmale für sich oder in beliebiger sinnvoller Kombination den Gegenstand der Erfindung, auch unabhängig von der Zusammenfassung in einzelnen Ansprüchen oder deren Rückbeziehungen.

### Es zeigen:

- Fig. 1:: Eine erfindungsgemäße Abscheidungseinrichtung im Längsschnitt;
- Fig. 2:: Die Abscheidungseinrichtung aus Fig. 1 in Draufsicht;
- Fig. 3:: Eine Draufsicht auf den Ablauf einer erfindungsgemäßen Abscheidungseinrichtung mit einer weiteren Ausführungsform eines Staukörpers.

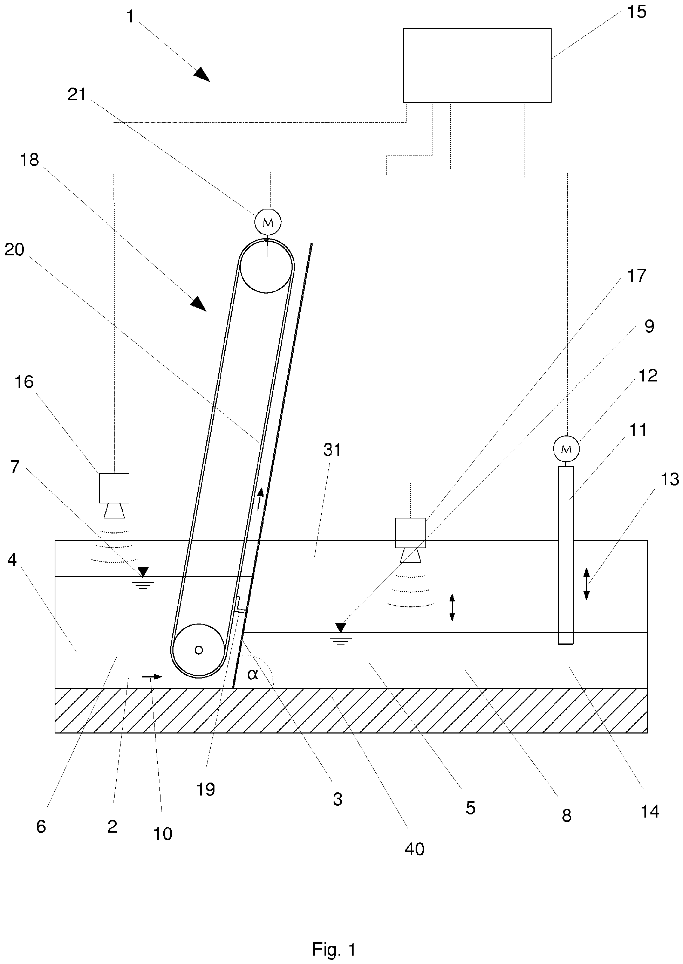

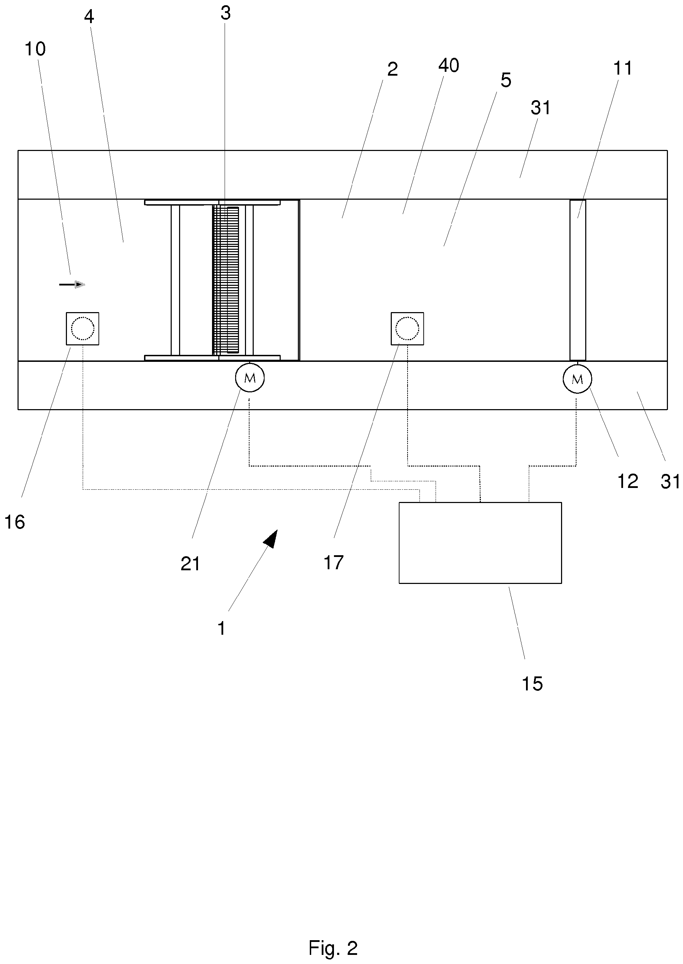

Die in den Fig. 1 und 2 dargestellte Abscheidungseinrichtung 1 zum Entfernen von Gegenständen aus einem Wasserstrom weist ein Gerinne 2 auf, in dem ein Abscheidungsfeld 3 angeordnet ist. Dabei bildet das Gerinne 2 einen Zulauf 4 und einen Ablauf 5 für das Abscheidungsfeld 3. Das Gerinne 2 weist einen Boden 40 und zwei gegenüberliegende Seitenwände 31 auf. Im dargestellten Ausführungsbeispiel ist das Gerinne 2 nach oben offen. Der Wasserstrom wird über den Zulauf 4 zu dem Abscheidungsfeld 3 geleitet. Nach dem Durchtreten des Abscheidungsfelds 3 kann der Wasserstrom durch den Ablauf 5 abgeführt werden. Dabei stellt sich im Betrieb, wie in Fig. 1 gut erkennbar, in dem Zulauf 4 vor dem Abscheidungsfeld 3 ein Oberwasser 6 mit einem Oberwasserpegel 7 ein. In dem Ablauf 5 stellt sich ein Unterwasser 8 mit einem Unterwasserpegel 9 ein. Entsprechend der Fließrichtung des Wassers von dem Zulauf 4 zu dem Ablauf 5 ist der Oberwasserpegel 7 höher als der Unterwasserpegel 9. Die sich daraus ergebende Höhendifferenz ermöglicht die Strömung des Wasserstroms durch das Gerinne 2 in der durch den Pfeil 10 angegebenen Strömungsrichtung. Die Abscheidungseinrichtung kann insbesondere in eine Abwasserkläranlage integriert sein.

Im dargestellten Ausführungsbeispiel ist das Abscheidungsfeld 3 als Rechenfeld ausgebildet und weist eine Vielzahl von nebeneinander angeordneten Rechenstäben auf. Die Rechenstäbe sind parallel zueinander angeordnet. Sie erstrecken sich in einem Winkel α zu der Horizontalen. Zwischen den Rechenstäben sind Durchlässe für den Wasserstrom ausgebildet. Die schematische Darstellung in den Fig. 1 und 2 zeigt weiterhin, dass die Abscheidungseinrichtung einen Staukörper 11 aufweist, der in dem Ablauf 5 angeordnet ist. Der Staukörper 11 ist zum Eintauchen in den Wasserstrom in Strömungsrichtung hinter dem Abscheidungsfeld 3 ausgebildet. Der Staukörper 11 weist eine Betätigung 12 auf, mit der der Staukörper 11 in der Verstellrichtung 13 hin- und herbewegt werden kann. Der Staukörper 11 kann dabei eine erste Stellung einnehmen, in der der Ablaufquerschnitt kleiner ist, eine zweite Stellung, in der der Ablaufquerschnitt größer ist, sowie eine dritte Stellung, in der der Ablaufquerschnitt kleiner oder größer als in der zweiten Stellung ist. Dabei ist die Verstellung des Staukörpers nicht auf die erste, zweite und dritte Stellung beschränkt, vielmehr kann der Staukörper im dargestellten Ausführungsbeispiel eine Vielzahl von Stellungen mit jeweils unterschiedlichem Ablaufquerschnitt 14 einnehmen. Auf diese Weise kann der Ablaufquerschnitt 14 in einem weiten Bereich eingestellt werden. Fig. 2 lässt dabei erkennen, dass der Staukörper 11 sich über die gesamte Breite des Gerinnes 2 in dem Bereich des Ablaufs 5 erstreckt.

Die Abscheidungseinrichtung weist weiterhin eine Steuereinrichtung 15 auf. Mit der Steuereinrichtung 15 kann die Betätigung 12 betätigt werden, um den Staukörper 11 zu verstellen.

Die Steuereinrichtung 15 umfasst einen ersten Sensor 16, durch den ein erstes Sensorsignal erzeugt wird. Der erste Sensor 16 erzeugt dabei ein von der Größe des Wasserstroms abhängiges erstes Sensorsignal. Im dargestellten Ausführungsbeispiel erfasst der erste Sensor 16 die Höhe des Oberwassers beziehungsweise den Oberwasserpegel 7. Der erste Sensor kann beispielsweise als berührungslos messender Ultraschallsensor oder als Radarsensor ausgebildet sein.

Die Steuereinrichtung 15 umfasst im dargestellten Ausführungsbeispiel darüber hinaus einen zweiten Sensor 17. Durch diesen wird ein zweites Sensorsignal erzeugt. Das zweite Sensorsignal ist ebenfalls von der Größe des Wasserstroms abhängig. Im dargestellten Ausführungsbeispiel misst der zweite Sensor 17 die Höhe des Unterwassers beziehungsweise den Unterwasserpegel 9. Auch der zweite Sensor 17 kann ein berührungslos messender Ultraschallsensor oder Radarsensor sein.

Der erste Sensor 16 und der zweite Sensor 17 sind über die gestrichelt angedeuteten Signalleitungen mit der Steuereinrichtung 15 verbunden. Die Betätigung 12 ist über eine gestrichelt angedeutete Steuerleitung mit der Steuereinrichtung 15 verbunden.

Die Steuereinrichtung 15 weist mehrere Betriebsmodi auf. In einem ersten Betriebsmodus wird die Strömungsgeschwindigkeit im Bereich des Abscheidungsfeldes 3 dadurch erhöht, dass der Staukörper 11 aus einer ersten Stellung, in der der Ablaufquerschnitt 14 kleiner ist, in eine zweite Stellung bewegt wird, in der der Ablaufquerschnitt 14 größer ist. Weiterhin weist die Steuereinrichtung 15 einen zweiten Betriebsmodus auf, in dem die Strömungsgeschwindigkeit in dem Bereich des Abscheidungsfeldes 3 dadurch reduziert wird, dass der Staukörper 11 aus der zweiten Stellung in eine dritte Stellung gebracht wird, wobei in der dritten Stellung der Ablaufquerschnitt 14 kleiner ist als in der zweiten Stellung. Auf diese Weise kann die Strömungsgeschwindigkeit im Bereich des Abscheidungsfeldes 3 verändert werden. Auf diese Weise ist es möglich, das Abscheidungsfeld 3 auch bei einer sich ändernden Größe des Wasserstroms optimiert zu betreiben. Zum einen ist es dabei möglich, die Strömungsgeschwindigkeit im Bereich des Abscheidungsfeldes nicht zu stark ansteigen zu lassen. Dadurch kann das Rückhaltevermögen des Abscheidungsfeldes ganz erheblich verbessert werden. Andererseits ist es möglich, ein zu starkes Absinken der Strömungsgeschwindigkeit im Bereich des Abscheidungsfeldes 3 zu vermeiden, welches zu einer Ablagerung von Sand in dem Zulauf vor dem Abscheidungsfeld 3 führt. Die Steuereinrichtung 15 ist so ausgestaltet, dass sie automatisch den ersten und (zu einem anderen Zeitpunkt) den zweiten Betriebsmodus aktivieren kann. Auf diese Weise kann die Steuereinrichtung 15 selbsttätig eine Anpassung an die jeweilige Betriebssituation vornehmen.

Im dargestellten Ausführungsbeispiel löst die Steuereinrichtung 15 dabei die Aktivierung des jeweiligen Betriebsmodus anhand der Messsignale des ersten Sensors 16 und des zweiten Sensors 17 aus.

Die Steuereinrichtung kann insbesondere so ausgebildet sein, dass sie die folgenden Steueraufgaben durchführt:
In der Steuereinrichtung kann ein erster Auslösewert für das erste Sensorsignal - oder das zweite Sensorsignal - gespeichert sein. Auf diese Weise kann die Steuereinrichtung bei Erreichen oder Überschreiten des Auslösewerts den ersten Betriebsmodus aktivieren. Dies kommt insbesondere z.B. in Betracht, wenn der Wasserstrom steigt oder sehr groß ist. Auf diese Weise kann der Staukörper 11 auch so eingestellt werden, dass er dem Wasserstrom den geringstmöglichen Widerstand bietet. Beispielsweise kann der Staukörper dann vollständig aus dem Unterwasser herausbewegt werden. Auf diese Weise kann bei starkem Wasseranfall, wie z.B. bei starkem Regen, der maximale Durchlauf der Abscheidungseinrichtung erhalten bleiben.

In der Steuereinrichtung kann ein zweiter Auslösewert für das erste Sensorsignal - oder das zweite Sensorsignal - gespeichert sein. Auf diese Weise kann die Steuereinrichtung bei Erreichen oder Unterschreiten des Auslösewerts den zweiten Betriebsmodus aktivieren. Dies kommt insbesondere bei einem zurückgehenden Wasseranfall in Betracht. Auf diese Weise kann der Ablaufquerschnitt an den reduzierten Wasseranfall angepasst und die Strömungsgeschwindigkeit in einem für das Abscheidungsfeld optimierten Bereich eingestellt werden.

In der Steuereinrichtung 15 kann ein dritter Auslösewert für das erste Sensorsignal und/oder das zweite Sensorsignal gespeichert sein, wobei die Steuereinrichtung bei Erreichen oder Unterschreiten des dritten Auslösewertes den ersten Betriebsmodus aktiviert. Auf diese Weise kann insbesondere auf einen sehr geringen Wasserstrom reagiert werden. In dieser Situation würde der Staukörper 11, wenn er zu tief in das Wasser eingetaucht ist, zu einer unerwünschten Reduzierung der Fließgeschwindigkeit im Bereich des Abscheidungsfeldes 3 führen. Beispielsweise kann der Staukörper 11 dann vollständig aus dem Unterwasser 9 herausbewegt werden. Da die Fließgeschwindigkeit aufgrund des geringen Wasserstroms ohnehin gering ist, könnte es sonst zu unerwünschten Ablagerungen von Sand und dergleichen vor dem Abscheidungsfeld 3 kommen. Wenn in dieser Situation der erste Betriebsmodus aktiviert wird, kann die Strömungsgeschwindigkeit erhöht und die unerwünschte Ablagerung von Sand und dergleichen reduziert oder vermieden werden.

Die Steuereinrichtung kann weiterhin ermöglichen, dass die Strömungsgeschwindigkeit im Bereich des Abscheidungsfeldes in einem günstigen Bereich gehalten wird. Die Strömungsgeschwindigkeit im Bereich des Abscheidungsfeldes kann dabei z.B. aufgrund der gemessenen Differenz zwischen dem Oberwasserpegel und dem Unterwasserpegel ermittelt werden. Hierbei ist es vorteilhaft, wenn die Steuereinrichtung den Staukörper 11 kontinuierlich oder in einer Vielzahl von Schritten verstellen kann, um die Eintauchtiefe des Staukörpers 11 einzustellen. Auf diese Weise kann die Strömungsgeschwindigkeit im Bereich des Abscheidungsfeldes in dem gewünschten Bereich gehalten werden.

Dabei ist es insbesondere auch möglich, dass die Steuereinrichtung einen Regelkreis mit einem Regler bildet, der das Steuersignal für die Betätigung 12 erzeugt. Mit dem Steuersignal kann die Betätigung 12 z.B. so betätigt werden, dass der Staukörper 11 in die erste, die zweite beziehungsweise die dritte Stellung gebracht wird. Dabei kann insbesondere das erste und/oder das zweite Sensorsignal als Regelgröße des Regelkreises verwendet werden. Insbesondere kann die durch das erste und zweite Sensorsignal sich ergebende Differenz des Oberwasserpegels 7 zu dem Unterwasserpegel 9 durch die Steuereinrichtung zum Zwecke der Regelung verwendet werden. Auf diese Weise kann ein geschlossener Regelkreis gebildet werden, der zuverlässig ermöglicht, die Strömungsgeschwindigkeit im Bereich des Abscheidungsfeldes 3 in dem gewünschten Bereich zu halten.

Die Regeleinrichtung 15 kann weiterhin eine Spülstoßdetektierung aufweisen. Hierzu kann anhand des ersten und/oder des zweiten Sensorsignals ein Anstieg des Wasserstroms detektiert werden. Sofern dieser Anstieg über einem in der Steuereinrichtung 15 gespeicherten Spülstoßauslösewert liegt, kann das Auftreten eines Spülstoßes erkannt werden. Die Steuereinrichtung 15 kann dann vorzugsweise den zweiten Betriebsmodus aktivieren, um die Strömungsgeschwindigkeit im Bereich des Abscheidungsfeldes zu reduzieren und dadurch das Rückhaltevermögen des Abscheidungsfeldes zu verbessern.

Weiterhin kann die Steuereinrichtung 15 ein Zeitprogramm umfassen, welches zu bestimmten Zeitpunkten den ersten oder den zweiten Betriebsmodus aktiviert. Vorzugsweise können die Zeitpunkte von den Anlagebetreibern eingestellt werden.

Fig. 1 lässt weiterhin erkennen, dass das Abscheidungsfeld 3 mit einer Reinigungseinrichtung 18 versehen ist. Die schematisch dargestellte Reinigungseinrichtung 18 kann z.B. insbesondere umlaufende Harken 19 aufweisen. Diese können Gegenstände, die sich in Fließrichtung vor dem Abscheidungsfeld 3 gesammelt haben, von dem Abscheidungsfeld 3 insbesondere nach oben wegbewegen. Die Harken 19 können an einem umlaufenden Zugmittel 20 angeordnet sein, das z.B. eine Kette umfassen kann. Die Harken 19 erstrecken sich vorzugsweise in die zwischen den Rechenstäben ausgebildeten Zwischenräume. Der Antrieb der Reinigungseinrichtung 18 erfolgt über einen schematisch dargestellten Motor 21. Die durch die Reinigungseinrichtung 18 von dem Abscheidungsfeld 3 entfernten Gegenstände können in bekannter Weise zu einer Waschpresse oder einem Sammelbehälter (nicht dargestellt) transportiert werden.

Die Steuereinrichtung 15 kann dabei dazu eingerichtet sein, die Reinigungseinrichtung 18 automatisch zu aktivieren. Hierzu kann die Steuereinrichtung 15 anhand des ersten und zweiten Sensorsignals beispielsweise den Oberwasserpegel 7 und den Unterwasserpegel 9 ermitteln. Wenn sich das Abscheidungsfeld 3 mit abgeschiedenen Gegenständen zusetzt, dann steigt dessen Strömungswiderstand. In der Folge wird die Differenz zwischen Oberwasserpegel 7 und Unterwasserpegel 9 größer. In der Steuereinrichtung 15 kann ein Auslösewert gespeichert sein, sodass bei Überschreiten einer Differenz zwischen dem mit dem ersten und zweiten Signal ermittelten Ober- und Unterwasserpegel 7, 9 die Reinigung ausgelöst wird. Hierzu ist die Steuereinrichtung mit dem Motor 21 über eine gestrichelt dargestellte Steuerleitung verbunden. Die Aktivierung der Reinigungseinrichtung 18 erfolgt dadurch, dass der Motor 21 in Betrieb gesetzt wird.

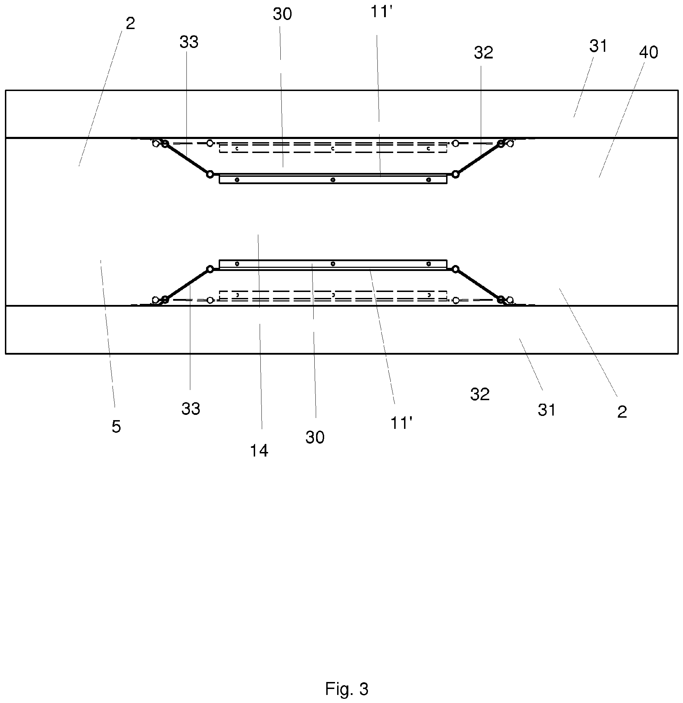

Fig. 3 zeigt eine Draufsicht auf den Ablauf 5 einer Abscheidungseinrichtung nach einer weiteren Ausführungsform. Dargestellt ist dabei eine weitere Ausgestaltung des Staukörpers 11', welcher von dem Staukörper 11 abweicht. Der Staukörper 11' kann bei der in den Fig. 1 und 2 dargestellten Abscheidungseinrichtung anstelle des Staukörpers 11 verwendet werden. Die Beschreibung der Fig. 1 und 2 gilt insoweit entsprechend für den Staukörper 11'.

In Fig. 3 ist der an das Abscheidungsfeld 3 anschließende Ablauf 5 einer Abscheideeinrichtung schematisch dargestellt. Das Abscheidungsfeld 3, der Zulauf 4 sowie die Steuereinrichtung mit den Sensoren 16 und 17 können wie bei der in den Fig. 1 und 2 beschriebenen Ausführungsform ausgestaltet sein, wobei die Steuereinrichtung 15 die Einstellung des Ablaufquerschnittes 14 mit dem Staukörper 11' vornimmt.

Der Staukörper 11' umfasst eine Basis 30, welche verstellbar an einer Seitenwand 31 des Gerinnes 2 angeordnet ist. Die Basis 30 ist über ein erstes Halteelement 32 und ein zweites Halteelement 33 mit der Seitenwand 31 verbunden. Die Basis 30 kann vorzugsweise plattenförmig ausgebildet sein. Die Basis 30 kann, wie dargestellt, parallel zu der Seitenwand 31 angeordnet sein. Das erste Halteelement 32 ist beweglich mit der Basis 30 verbunden. Das zweite Halteelement 33 ist beweglich mit der Basis 30 verbunden. Auf diese Weise wird die Basis 30 beweglich gehalten, sodass der Staukörper 11' eine erste Stellung einnehmen kann, in der der Ablaufquerschnitt 14 kleiner ist. Diese ist in Fig. 3 mit durchgezogenen Linien dargestellt. Die Basis 30 kann darüber hinaus eine zweite Stellung einnehmen, in der der Ablaufquerschnitt 14 größer ist. Dies ist in Fig. 3 mit gestrichelten Linien dargestellt. In der zweiten Stellung befindet sich die Basis 30 näher an der Seitenwand 31. Bei der dargestellten Ausführungsform ist zwischen dem ersten Halteelement 32 und der Basis 30 ein erstes Gelenk vorgesehen. Über ein zweites Gelenk ist das erste Halteelement 32 mit der Seitenwand 31 verbunden. Entsprechend ist zwischen dem zweiten Halteelement 33 und der Basis 30 ein erstes Gelenk vorgesehen. Über ein zweites Gelenk ist das zweite Halteelement 33 mit der Seitenwand 31 verbunden. Durch die Basis 30 sowie das erste und zweite Halteelement 32, 33 kann der Wasserstrom von der Seitenwand 31 weg geleitet werden, wodurch der Ablaufquerschnitt 14 verändert wird.

Die Verstelleinrichtung des Staukörpers 11' ist aus Gründen der Übersichtlichkeit in Fig. 3 nicht dargestellt. Die Verstellung kann z.B. durch ein aufblasbares Luftpolster erfolgen. Dieses kann insbesondere zwischen der Seitenwand 31 und der Basis 30 angeordnet sein. Das Aufblasen des Luftpolsters kann über eine Druckluftquelle erfolgen und wird von der oben beschriebenen Steuereinrichtung 15 ausgelöst. Auf diese Weise kann die Basis 30 von der Seitenwand 31 wegbewegt werden, sodass der Ablaufquerschnitt 14 verkleinert wird. Wenn Luft aus dem Luftpolster abgelassen wird, kann der Staukörper 11' wieder zu der Seitenwand 31 hinbewegt werden, sodass der Ablaufquerschnitt 14 wieder vergrößert wird. Hierbei kann eine nicht dargestellte Feder verwendet werden, welche die Basis 30 in Richtung zu der Seitenwand 31 drückt. Die Verstellung kann aber auch auf andere Weise, z.B. mit einem Motor erfolgen.

Während in Fig. 3 nur zwei Stellungen des Staukörpers 11' dargestellt sind, kann dieser weitere nicht dargestellte Stellungen einnehmen, welche zwischen den dargestellten Stellungen liegen. Auf diese Weise kann der Ablaufquerschnitt 14 stufenlos oder in kleinen Schritten eingestellt werden.

In Fig. 3 ist ersichtlich, dass in dem Ablauf 5 zwei identisch ausgebildete Staukörper 11' gegenüberliegend an den Seitenwänden 31 angeordnet sind.

## Patentansprüche

1. Abscheidungseinrichtung zum Entfernen von Gegenständen aus einem Wasserstrom, mit einem Abscheidungsfeld (3) und einem Gerinne (2), das einen Zulauf (4) und einen Ablauf (5) für das Abscheidungsfeld (3) bildet, wobei sich im Betrieb in dem Zulauf (4) vor dem Abscheidungsfeld (3) ein Oberwasser (6) mit einem Oberwasserpegel (7) und in dem Ablauf (5) hinter dem Abscheidungsfeld (3) ein Unterwasser (8) mit einem Unterwasserpegel (9) einstellen kann, wobei der Ablauf (5) einen Ablaufquerschnitt (14) für den Wasserstrom aufweist, mit einem über eine Betätigung (12) verstellbaren Staukörper (11, 11') zum Eintauchen in den Ablauf, der zumindest zwischen einer ersten Stellung und einer zweiten Stellung verstellbar ist, wobei in der ersten Stellung der Ablaufquerschnitt (14) kleiner und in der zweiten Stellung der Ablaufquerschnitt (14) größer ist, und mit einer Steuereinrichtung (15), wobei die Steuereinrichtung (15) einen ersten Betriebsmodus aufweist, in dem die Strömungsgeschwindigkeit in dem Bereich des Abscheidungsfeldes (3) dadurch erhöht wird, dass der Staukörper (11, 11') aus der ersten Stellung in die zweite Stellung gebracht wird, wobei die Steuereinrichtung (15) einen zweiten Betriebsmodus aufweist, in dem die Strömungsgeschwindigkeit in dem Bereich des Abscheidungsfeldes (3) dadurch verändert wird, dass der Staukörper (11, 11') aus der zweiten Stellung in eine dritte Stellung gebracht wird, wobei in der dritten Stellung der Ablaufquerschnitt (14) kleiner oder größer als in der zweiten Stellung ist, und wobei die Steuereinrichtung eingerichtet ist, um automatisch den ersten und/oder den zweiten Betriebsmodus zu aktivieren, **dadurch gekennzeichnet, dass** die Steuereinrichtung (15) einen ersten Sensor (16) umfasst, durch den ein von der Größe des Wasserstroms abhängiges erstes Sensorsignal erzeugt wird und dass die Steuereinrichtung (15) eine Aktivierung des ersten und/oder des zweiten Betriebsmodus in Abhängigkeit von dem ersten Sensorsignal auslöst.

2. Abscheidungseinrichtung nach Anspruch 1, **dadurch gekennzeichnet, dass** die Steuereinrichtung (15) ein Zeitprogramm umfasst, welches die Aktivierung des ersten und/oder des zweiten Betriebsmodus auslöst.

3. Abscheidungseinrichtung nach Anspruch 1 oder 2, **dadurch gekennzeichnet, dass** die Steuereinrichtung (15) einen zweiten Sensor (17) umfasst, durch den ein zweites Sensorsignal erzeugt wird, und dass die Steuereinrichtung (15) die Aktivierung des ersten und des zweiten Betriebsmodus in Abhängigkeit von dem zweiten Sensorsignal auslöst.

4. Abscheidungseinrichtung nach einem der Ansprüche 1 bis 3, **dadurch gekennzeichnet, dass** in der Steuereinrichtung (15) ein erster Auslösewert für das erste Sensorsignal und/oder das zweite Sensorsignal gespeichert ist und dass die Steuereinrichtung (15) bei Erreichen oder Überschreiten des ersten Auslösewertes den ersten Betriebsmodus aktiviert.

5. Abscheidungseinrichtung nach einem der Ansprüche 1 bis 4, **dadurch gekennzeichnet, dass** in der Steuereinrichtung (15) ein zweiter Auslösewert für das erste Sensorsignal und/oder das zweite Sensorsignal gespeichert ist und dass die Steuereinrichtung (15) bei Erreichen oder Unterschreiten des zweiten Auslösewertes den zweiten Betriebsmodus aktiviert.

6. Abscheidungseinrichtung nach einem der Ansprüche 1 bis 5, **dadurch gekennzeichnet, dass** in der Steuereinrichtung (15) ein dritter Auslösewert für das erste Sensorsignal und/oder das zweite Sensorsignal gespeichert ist und dass die Steuereinrichtung (15) bei Erreichen oder Unterschreiten des dritten Auslösewertes den ersten Betriebsmodus aktiviert.

7. Abscheidungseinrichtung nach einem der Ansprüche 1 bis 6, **dadurch gekennzeichnet, dass** das erste Sensorsignal den Oberwasserpegel (7) und das zweite Sensorsignal den Unterwasserpegel (8) erfasst, dass in der Steuereinrichtung (15) ein vierter Auslösewert gespeichert ist, und dass die Steuereinrichtung, wenn eine Differenz zwischen dem ersten Sensorsignal und dem zweiten Sensorsignal den vierten Auslösewert erreicht oder überschreitet, eine Reinigung des Abscheidungsfeldes (3) mit einer Reinigungseinrichtung (18) auslöst.

8. Abscheidungseinrichtung nach einem der Ansprüche 1 bis 7, **dadurch gekennzeichnet, dass** die Steuereinrichtung (15) eine Spülstoßdetektierung aufweist, welche anhand wenigstens eines des ersten und des zweiten Sensorsignals einen Anstieg des Wasserstromes detektiert, wobei in der Steuereinrichtung (15) ein Spülstoßauslösewert gespeichert ist und wobei, wenn das wenigstens eine des ersten und zweiten Sensorsignals oder ein Anstieg des wenigstens einen des ersten und zweiten Sensorsignals in einer Zeiteinheit den Spülstoßauslösewert erreicht oder überschreitet, der zweite Betriebsmodus aktiviert wird.

9. Abscheidungseinrichtung nach einem der Ansprüche 1 bis 8, **dadurch gekennzeichnet, dass** die Steuereinrichtung (15) einen Regelkreis mit einem Regler bildet, der ein Steuersignal für die Betätigung (12) des Staukörpers (11, 11') erzeugt und dass das erste Sensorsignal und/oder das zweite Sensorsignal als Regelgröße des Regelkreises verwendet wird.

10. Abscheidungseinrichtung nach einem der Ansprüche 1 bis 9, **dadurch gekennzeichnet, dass** der Staukörper (11) sich über die gesamte Breite des Ablaufes (5) erstreckt.

11. Abscheidungseinrichtung nach einem der Ansprüche 1 bis 10, **dadurch gekennzeichnet, dass** der Staukörper (11') an einer Seitenwand (31) des Ablaufs (5) verstellbar angeordnet ist.

12. Verfahren für Betrieb einer Abscheidungseinrichtung (1) zum Entfernen von Gegenständen aus einem Wasserstrom, wobei die Abscheidungseinrichtung (1) ein Abscheidungsfeld (3) und ein Gerinne, das einen Zulauf (4) und einen Ablauf (5) für das Abscheidungsfeld (3) bildet, aufweist, wobei sich in dem Zulauf (4) vor dem Abscheidungsfeld (3) ein Oberwasser (6) mit einem Oberwasserpegel (7) und in dem Ablauf (5) hinter dem Abscheidungsfeld (3) ein Unterwasser (8) mit einem Unterwasserpegel (9) einstellt, wobei der Ablauf (5) einen Ablaufquerschnitt (14) für den Wasserstrom aufweist, wobei die Abscheidungseinrichtung (1) einen über eine Betätigung (12) verstellbaren Staukörper (11, 11') zum Eintauchen in den Ablauf (5) aufweist, der zumindest zwischen einer ersten Stellung und einer zweiten Stellung verstellbar ist, wobei in der ersten Stellung der Ablaufquerschnitt (14) kleiner und in der zweiten Stellung der Ablaufquerschnitt (14) größer ist, wobei die Abscheidungseinrichtung eine Steuereinrichtung (15) aufweist, wobei die Steuereinrichtung einen ersten Betriebsmodus umfasst, in dem die Strömungsgeschwindigkeit in dem Bereich des Abscheidungsfeldes (3) dadurch erhöht wird, dass der Staukörper (11, 11') aus der ersten Stellung in die zweite Stellung gebracht wird, und wobei die Steuereinrichtung (15) einen zweiten Betriebsmodus umfasst, in dem die Strömungsgeschwindigkeit in dem Bereich des Abscheidungsfeldes (3) dadurch verändert wird, dass der Staukörper (11, 11') aus der zweiten Stellung in eine dritte Stellung gebracht wird, wobei in der dritten Stellung der Ablaufquerschnitt (14) kleiner oder größer als in der zweiten Stellung ist, wobei die Steuereinrichtung automatisch den ersten und/oder den zweiten Betriebsmodus aktiviert, wobei die Steuereinrichtung (15) einen ersten Sensor (16) umfasst, durch den ein von der Größe des Wasserstroms abhängiges erstes Sensorsignal erzeugt wird und wobei die Steuereinrichtung (15) eine Aktivierung des ersten und/oder des zweiten Betriebsmodus in Abhängigkeit von dem ersten Sensorsignal auslöst.

## Claims

1. Separation device for removing objects from a water flow, comprising a separation field (3) and a gutter (2) which forms an inlet (4) and an outlet (5) for the separation field (3), wherein a headwater (6) with a headwater level (7) can be established in the inlet (4) upstream from the separation field (3) and a tailwater (8) with a tailwater level (9) can be established in the outlet (5) downstream from the separation field (3) during operation, the outlet (5) having a drain cross section (14) for the water flow, comprising a damming body (11, 11'), which is adjustable by way of an actuation system (12), for dipping into the outlet, which is adjustable at least between a first position and a second position, the drain cross section (14) being smaller in the first position and the drain cross section (14) being larger in the second position, and comprising a control device (15), the control device (15) having a first operating mode, in which the flow speed in the region of the separation field (3) is increased by bringing the damming body (11, 11') from the first position into the second position, the control device (15) having a second operating mode, in which the flow speed in the region of the separation field (3) is changed by bringing the damming body (11, 11') from the second position into a third position, the drain cross section (14) being smaller or larger in the third position than in the second position, and the control device being set up to activate the first and/or the second operating mode automatically, **characterised in that** the control device (15) comprises a first sensor (16), which generates a first sensor signal, which is dependent on the size of the water flow, and **in that** the control device (15) triggers activation of the first and/or second operating mode as a function of the first sensor signal.

2. Separation device according to claim 1, **characterised in that** the control device (15) comprises a time program which triggers the activation of the first and/or second operating mode.

3. Separation device according to either claim 1 or claim 2, **characterised in that** the control device (15) comprises a second sensor (17), which generates a second sensor signal, and **in that** the control device (15) triggers the activation of the first and second operating mode as a function of the second sensor signal.

4. Separation device according to any of claims 1 to 3, **characterised in that** a first trigger value for the first sensor signal and/or the second sensor signal is stored in the control device (15) and **in that** the control device (15) activates the first operating mode when the first trigger value is reached or exceeded.

5. Separation device according to any of claims 1 to 4, **characterised in that** a second trigger value for the first sensor signal and/or the second sensor signal is stored in the control device (15) and **in that** the control device (15) activates the second operating mode when the second trigger value is reached or undershot.

6. Separation device according to any of claims 1 to 5, **characterised in that** a third trigger value for the first sensor signal and/or the second sensor signal is stored in the control device (15) and **in that** the control device (15) activates the third operating mode when the third trigger value is reached or undershot.

7. Separation device according to any of claims 1 to 6, **characterised in that** the first sensor signal detects the headwater level (7) and the second sensor signal detects the tailwater level (8), **in that** a fourth trigger value is stored in the control device (15), and **in that** the control device triggers cleaning of the separation field (3) using a cleaning device (18) when a difference between the first sensor signal and the second sensor signal reaches or exceeds the fourth trigger value.

8. Separation device according to any of claims 1 to 7, **characterised in that** the control device (15) has a surge flush detection system, which detects an increase in the water flow by way of at least one of the first and second sensor signals, a surge flush trigger value being stored in the control device (15) and the second operating mode being activated when the at least one of the first and second sensor signals or an increase in the at least one of the first and second sensor signals reaches or exceeds the surge flush trigger value within a unit of time.

9. Separation device according to any of claims 1 to 8, **characterised in that** the control device (15) forms a regulating circuit comprising a regulator which generates a control signal for the actuation system (12) of the damming body (11, 11') and **in that** the first sensor signal and/or the second sensor signal is used as a regulating variable of the regulating circuit.

10. Separation device according to any of claims 1 to 9, **characterised in that** the damming body (11) extends over the entire width of the outlet (5).

11. Separation device according to any of claims 1 to 10, **characterised in that** the damming body (11') is arranged adjustably on a side wall (31) of the outlet (5).

12. Method for operating a separation device (1) for removing objects from a water flow, the separation device (1) comprising a separation field (3) and a gutter (2) which forms an inlet (4) and an outlet (5) for the separation field (3), a headwater (6) with a headwater level (7) being established in the inlet (4) upstream from the separation field (3) and a tailwater (8) with a tailwater level (9) being established in the outlet (5) downstream from the separation field (3) during operation, the outlet (5) having a drain cross section (14) for the water flow, the separation device (1) comprising a damming body (11, 11'), which is adjustable by way of an actuation system (12), for dipping into the outlet (5), which is adjustable at least between a first position and a second position, the drain cross section (14) being smaller in the first position and the drain cross section (14) being larger in the second position, the separation device comprising a control device (15), the control device having a first operating mode in which the flow speed in the region of the separation field (3) is increased by bringing the damming body (11, 11') from the first position into the second position, and the control device (15) having a second operating mode in which the flow speed in the region of the separation field (3) is changed by bringing the damming body (11, 11') from the second position into a third position, the drain cross section (14) being smaller or larger in the third position than in the second position, the control device activating the first and/or the second operating mode automatically, the control device (15) comprising a first sensor (16) which generates a first sensor signal which is dependent on the size of the water flow and the control device (15) triggering activation of the first and/or second operating mode as a function of the first sensor signal.

## Revendications

1. Dispositif de séparation pour éliminer des objets d'un courant d'eau, comportant un champ de séparation (3) et une rigole (2), laquelle forme une arrivée (4) et une évacuation (5) pour le champ de séparation (3), dans lequel, en fonctionnement, un bief amont (6) avec un niveau du bief amont (7) est susceptible de s'établir dans l'arrivée (4) en amont du champ de séparation (3) et un bief aval (8) avec un niveau du bief aval (9) est susceptible de s'établir dans l'évacuation (5) en aval du champ de séparation (3), dans lequel l'évacuation (5) présente une section transversale d'évacuation (14) pour le courant d'eau, avec un corps de retenue (11, 11') réglable par le biais d'un actionnement (12) destiné à l'immersion dans l'évacuation, laquelle est réglable au moins entre une première position et une deuxième position, dans lequel la section transversale d'évacuation (14) est plus faible dans la première position et la section transversale d'évacuation (14) est plus grande dans la deuxième position, et comportant un dispositif de commande (15), dans lequel le dispositif de commande (15) présente un premier mode de fonctionnement où la vitesse d'écoulement dans la zone du champ de séparation (3) est augmentée par le passage du corps de retenue (11, 11') de la première position à la deuxième position, dans lequel le dispositif de commande (15) présente un deuxième mode de fonctionnement où la vitesse d'écoulement dans la zone du champ de séparation (3) est modifiée par le passage du corps de retenue (11, 11') de la deuxième position à une troisième position, dans lequel la section transversale d'évacuation (14) est plus faible ou plus grande dans la troisième position que dans la deuxième position, et dans lequel le dispositif de commande est configuré pour activer automatiquement le premier et/ou le deuxième mode de fonctionnement, **caractérisé en ce que** le dispositif de commande (15) comprend un premier capteur (16), par le biais duquel est généré un premier signal de capteur dépendant de la grandeur du courant d'eau et **en ce que** le dispositif de commande (15) déclenche une activation du premier et/ou du deuxième mode de fonctionnement en fonction du premier signal de capteur.

2. Dispositif de séparation selon la revendication 1, **caractérisé en ce que** le dispositif de commande (15) comprend un programme horaire, lequel déclenche l'activation du premier et/ou du deuxième mode de fonctionnement.

3. Dispositif de séparation selon la revendication 1 ou 2, **caractérisé en ce que** le dispositif de commande (15) comprend un deuxième capteur (17), par le biais duquel est généré un deuxième signal de capteur, et **en ce que** le dispositif de commande (15) déclenche l'activation du premier et du deuxième mode de fonctionnement en fonction du deuxième signal de capteur.

4. Dispositif de séparation selon l'une des revendications 1 à 3, **caractérisé en ce qu'**une première valeur de déclenchement est mémorisée dans le dispositif de commande (15) pour le premier signal de capteur et/ou le deuxième signal de capteur et **en ce que** le dispositif de commande (15) active le premier mode de fonctionnement lorsque la première valeur de déclenchement est atteinte ou dépassée.

5. Dispositif de séparation selon l'une des revendications 1 à 4, **caractérisé en ce qu'**une deuxième valeur de déclenchement est mémorisée dans le dispositif de commande (15) pour le premier signal de capteur et/ou le deuxième signal de capteur et **en ce que** le dispositif de commande (15) active le deuxième mode de fonctionnement lorsque la deuxième valeur de déclenchement est atteinte ou sous-dépassée.

6. Dispositif de séparation selon l'une des revendications 1 à 5, **caractérisé en ce qu'**une troisième valeur de déclenchement est mémorisée dans le dispositif de commande (15) pour le premier signal de capteur et/ou le deuxième signal de capteur et **en ce que** le dispositif de commande (15) active le premier mode de fonctionnement lorsque la troisième valeur de déclenchement est atteinte ou sous-dépassée.

7. Dispositif de séparation selon l'une des revendications 1 à 6, **caractérisé en ce que** le premier signal de capteur saisit le niveau du bief amont (7) et le deuxième signal de capteur saisit le niveau du bief aval (8), **en ce qu'**une quatrième valeur de déclenchement est mémorisée dans le dispositif de commande (15), et **en ce que** le dispositif de commande (15) déclenche un nettoyage du champ de séparation (3) avec un dispositif nettoyant (18) lorsqu'une différence entre le premier signal de capteur et le deuxième signal de capteur atteint ou dépasse la quatrième valeur de déclenchement.

8. Dispositif de séparation selon l'une des revendications 1 à 7, **caractérisé en ce que** le dispositif de commande (15) présente une détection de déferlement de rinçage, laquelle détecte une augmentation du courant d'eau à l'aide d'au moins un des premier et deuxième signaux de capteur, dans lequel une valeur de déclenchement de déferlement de rinçage est mémorisée dans le dispositif de commande (15) et dans lequel le deuxième mode de fonctionnement est activé lorsque l'au moins un des premier et deuxième signaux de capteur ou une augmentation de l'au moins un des premier et deuxième signaux de capteur dans une unité de temps atteint ou dépasse la valeur de déclenchement de déferlement de rinçage.

9. Dispositif de séparation selon l'une des revendications 1 à 8, **caractérisé en ce que** le dispositif de commande (15) forme un circuit de régulation avec d'un régulateur, lequel génère un signal de commande pour l'actionnement (12) du corps de retenue (11, 11') et **en ce que** le premier signal de capteur et/ou le deuxième signal de capteur est utilisé comme grandeur de régulation du circuit de régulation.

10. Dispositif de séparation selon l'une des revendications 1 à 9, **caractérisé en ce que** le corps de retenue (11) s'étend sur toute la largeur de l'évacuation (5).

11. Dispositif de séparation selon l'une des revendications 1 à 10, **caractérisé en ce que** le corps de retenue (11') est disposé de manière réglable sur une paroi latérale (31) de l'évacuation (5).

12. Procédé de fonctionnement d'un dispositif de séparation (1) pour éliminer des objets d'un courant d'eau, dans lequel le dispositif de séparation (1) présente un champ de séparation (3) et une rigole, laquelle forme une arrivée (4) et une évacuation (5) pour le champ de séparation (3), dans lequel un bief amont (6) comportant un niveau du bief amont (7) s'établit dans l'arrivée (4) en amont du champ de séparation (3) et un bief aval (8) comportant un niveau du bief aval (9) s'établit dans l'évacuation (5) en aval du champ de séparation (3), dans lequel l'évacuation (5) présente une section transversale d'évacuation (14) pour le courant d'eau, dans lequel le dispositif de séparation (1) présente un corps de retenue (11, 11') réglable par le biais d'un actionnement (12) destiné à l'immersion dans l'évacuation (5), laquelle est réglable au moins entre une première position et une deuxième position, dans lequel la section transversale d'évacuation (14) est plus faible dans la première position et la section transversale d'évacuation (14) est plus grande dans la deuxième position, dans lequel le dispositif de séparation présente un dispositif de commande (15), dans lequel le dispositif de commande comprend un premier mode de fonctionnement où la vitesse d'écoulement dans la zone du champ de séparation (3) est augmentée par le passage du corps de retenue (11, 11') de la première position à la deuxième position, et dans lequel le dispositif de commande (15) comprend un deuxième mode de fonctionnement où la vitesse d'écoulement dans la zone du champ de séparation (3) est modifiée par le passage du corps de retenue (11, 11') de la deuxième position à une troisième position, dans lequel la section transversale d'évacuation (14) est plus faible ou plus grande dans la troisième position que dans la deuxième position, dans lequel le dispositif de commande est disposé pour activer automatiquement le premier et/ou le deuxième mode de fonctionnement, dans lequel le dispositif de commande (15) comprend un premier capteur (16), par le biais duquel est généré un premier signal de capteur dépendant de la grandeur du courant d'eau et dans lequel le dispositif de commande (15) déclenche une activation du premier et/ou du deuxième mode de fonctionnement en fonction du premier signal de capteur.
